# EUROPEAN PATENT APPLICATION

(11) **EP 4 467 933 A1**
(43) Date of publication of application: **27.11.2024**
(21) Application number: 22922090.0
(22) Date of filing: 30.11.2022
(51) Int. Cl.: G01D 5/347

(54) **ENCODER, MOTOR, AND METHOD FOR MANUFACTURING ENCODER**

(30) Priority: 20.01.2022 JP 2022007296
(71) Applicant: Panasonic Intellectual Property Management Co., Ltd., Osaka-shi, Osaka 540-6207 (JP)
(72) Inventor: AGEHARA, Akio, Osaka 571-0057 (JP)
(74) Representative: SSM Sandmair
(86) International application number: PCT/JP2022/044280
(87) International publication number: WO 2023/139939

(57) **Abstract**

To enhance productivity of an encoder. An encoder (20) disclosed herein includes: a boss (25) that rotates about a rotation axis of a shaft included in a motor; a circular rotating plate (21) that is fixed to the boss (25) and rotates about the rotation axis; a bonding portion (27) that fixes the boss (25) and the rotating plate (21); and an optical module including a light source that irradiates the rotating plate (21) with light and a light receiving element that receives light emitted from the light source and reflected by the rotating plate (21). Bonding portion (27) includes a cured product of an adhesive having a photocuring property and an anaerobic curing property. A part of bonding portion (27) is exposed from between boss (25) and rotating plate (21) and is in contact with boss (25) and rotating plate (21).

## Description

### TECHNICAL FIELD

The present disclosure relates to an encoder, a motor, and a method for manufacturing the encoder.

### BACKGROUND ART

Conventionally, an encoder that detects a rotational position of a shaft included in a motor has been known (For example, PTL 1). The encoder of PTL 1 includes a boss that rotates about a rotation axis of a shaft, a transparent rotating plate that is fixed to the boss and rotates about the rotation axis, an adhesive that fixes the boss and the rotating plate, and a light emitting element and a light receiving element that are provided so as to sandwich the rotating plate. The encoder is configured such that light emitted from the light emitting element and transmitted through the rotating plate can be detected by the light receiving element.

### Citation List

### Patent Literature

PTL 1: Unexamined Japanese Patent Publication No. 2018-91739

### SUMMARY OF THE INVENTION

PTL 1 exemplifies the use of an ultraviolet curable resin or a thermosetting resin as an adhesive for fixing the boss and the rotating plate. However, the former has an advantage that the rotating plate positioned on the boss can be immediately fixed by curing, but has a disadvantage that it is difficult to utilize the rotating plate when the rotating plate is opaque. The latter has a disadvantage that thermal curing in a heating device takes time and the relative position between the positioned boss and the rotating plate can vary due to vibration, thermal expansion, thermal contraction, etc. For example, when an opaque rotating plate is used, it is difficult to sufficiently increase the productivity of the encoder even if the technical information disclosed in PTL 1 is utilized. In such a situation, an object of the present disclosure is to increase the productivity of the encoder.

An aspect according to the present disclosure relates to an encoder. The encoder includes: a boss that rotates about a rotation axis of a shaft included in a motor; a rotating plate that has a circular shape, is fixed to the boss, and rotates around the rotation axis; a bonding portion that fixes the boss and the rotating plate; and an optical module including a light source that irradiates the rotating plate with light and a light receiving element that receives light emitted from the light source and reflected by the rotating plate. The bonding portion includes a cured product of an adhesive having a photocuring property and an anaerobic curing property, and a part of the bonding portion is exposed from between the boss and the rotating plate and is in contact with the boss and the rotating plate.

Another aspect according to the present disclosure relates to a motor. The motor includes: the encoder described above, a shaft attached to the boss; a rotor attached to the shaft; and a stator facing the rotor.

Another aspect according to the present disclosure relates to a method for manufacturing an encoder. The method includes: a preparation step of preparing a boss and a rotating plate; an application step of applying an adhesive having a photocuring property and an anaerobic curing property to at least one of the boss and the rotating plate; a positioning step of positioning the boss and the rotating plate to expose a part of the adhesive from between the boss and the rotating plate and bring the part of the adhesive in contact with the boss and the rotating plate; a temporary fixing step of temporarily fixing the boss and the rotating plate by photocuring the part of the adhesive; and a main fixing step of forming a bonding portion that mainly fixes the boss and the rotating plate by anaerobically curing a remainder of the adhesive.

According to the present disclosure, the productivity of the encoder can be enhanced.

### BRIEF DESCRIPTION OF THE DRAWINGS

Fig. 1 is a cross-sectional view schematically illustrating a motor including an encoder of a first exemplary embodiment.
Fig. 2 is an enlarged cross-sectional view illustrating a main part of encoder of the first exemplary embodiment.
Fig. 3 is a plan view in a case where an optical module according to the encoder of the first exemplary embodiment has a rectangular shape.
Fig. 4 is a plan view in a case where the optical module according to the encoder of the first exemplary embodiment has a rectangular shape with rounded corners.
Fig. 5 is a plan view in a case where a light source and light receiving elements in the optical module illustrated in Fig. 3 are replaced with each other.
Fig. 6 is a plan view in a case where the light source and the light receiving elements in the optical module illustrated in Fig. 3 are arranged at positions shifted from each other along a direction in which a rotating plate rotates.
Fig. 7 is a cross-sectional view illustrating arrangement of the optical module and an electronic component on a board according to the encoder of the first exemplary embodiment.
Fig. 8 is a cross-sectional view illustrating attachment of a board to a frame according to the encoder of the first exemplary embodiment.
Fig. 9 is a flowchart of a method for manufacturing an encoder of the first exemplary embodiment.
Fig. 10 is an enlarged cross-sectional view illustrating a main part of an encoder of a second exemplary embodiment.

### DESCRIPTION OF EMBODIMENT

Exemplary embodiments of an encoder, a motor, and a method for manufacturing the encoder according to the present disclosure will be described below with reference to examples. However, the present disclosure is not limited to examples described below. In the following description, specific numerical values and materials may be exemplified, but other numerical values and materials may be applied as long as the effects of the present disclosure can be obtained.

### (Encoder)

An encoder according to the present disclosure includes a boss, a rotating plate, a bonding portion, and an optical module.

The boss rotates about a rotation axis of a shaft included in a motor. The boss may be fixed to the shaft by a bolt. The boss may be made of metal such as stainless steel, for example.

The rotating plate is fixed to the boss and rotates about the rotation axis of the shaft. The rotating plate may rotate about the rotation axis integrally with the boss. The rotating plate may have a predetermined pattern formed along the circumferential direction thereof. The predetermined pattern may be a pattern used to detect the rotational position of the shaft or a pattern used to detect the rotational position and the rotation speed of the shaft.

The rotating plate may be opaque. The rotating plate is formed in a circular shape (or disk-shaped). The circular shape refers to a shape in which 80% or more of the outline shape is formed by an arc.

Opaque means, for example, shielding ultraviolet light or visible light by 90% or more. The rotating plate may be made of metal such as stainless steel, for example.

The rotational position of the shaft refers to a relative angular position or an absolute angular position of the shaft. The rotation speed of the shaft refers to the number of rotations of the shaft.

The bonding portion fixes the boss and the rotating plate. The bonding portion includes a cured product of an adhesive having a photocuring property (for example, ultraviolet (UV) curing properties) and an anaerobic curing property. The adhesive includes, for example, a monomer (if necessary, further an oligomer), a photopolymerization initiator, an anaerobic catalyst, and the like. The photocuring property refer to a property of being solidified (photopolymerized or photocured) by light irradiation. The anaerobic curing property refers to a property of solidifying (anaerobic polymerization or anaerobic curing) in an environment shielded from oxygen or air. The photopolymerization initiator generates an active species (for example, a radical) for initiating polymerization of a monomer or an oligomer by irradiation with UV light, visible light, or the like. Photopolymerization proceeds in a short time by chain transfer. An anaerobic catalyst is a catalyst that is stable in the presence of oxygen but is activated when shielded from oxygen to advance polymerization of a monomer and an oligomer, and generally contains metal ion species. Anaerobic curing proceeds relatively slowly. Anaerobic curing may be accelerated by heating (for example, 40°C or more and 100° or less), but the anaerobic curing proceeds without heating (even at room temperature). Anaerobic curing is excellent in that an influence such as curing shrinkage of an adhesive is small and distortion is hardly generated in a rotating plate. The adhesive may contain, for example, a liquid acrylic resin. The liquid acrylic resin contains a (meth) acrylic monomer, a (meth) acrylic oligomer (for example, a urethane-based oligomer), and the like.

The optical module includes a light source that irradiates the rotating plate with light and a light receiving element that receives the light emitted from the light source and reflected by the rotating plate. Both the light source and the light receiving element may be disposed on one side of the rotating plate. The light receiving element may convert the received light into an electric signal. The electric signal may be used to determine at least one of the rotational position and the rotation speed of the shaft.

A part of the bonding portion is exposed from between the boss and the rotating plate and is in contact with the boss and the rotating plate. A portion of the bonding portion exposed from between the boss and the rotating plate (hereinafter, it is also referred to as an exposed portion) can be formed by irradiating an adhesive having a photocuring property and an anaerobic curing property with light (for example, ultraviolet light or visible light). Since the exposed portion is in contact with the boss and the rotating plate, the boss and the rotating plate can be fixed to the extent that the boss and the rotating plate are not displaced by the exposed portion formed by light irradiation. Therefore, the boss and the rotating plate can be temporarily fixed by positioning the boss and the rotating plate and then forming the exposed portion by light irradiation. The relative position of the rotating plate with respect to the boss is fixed by the temporary fixing. A portion of the adhesive which is difficult to be irradiated with light is anaerobically cured with the lapse of time, whereby the main fixation between the boss and the rotating plate is completed. The photocuring for temporarily fixing the boss and the rotating plate can be instantaneously completed, and after the temporary fixing, the manufacturing step can proceed without waiting for completion of anaerobic curing. Therefore, the productivity of the encoder can be enhanced.

The adhesive may be heated to promote anaerobic curing. Even when anaerobic curing takes a relatively long time or an external force such as vibration is applied to the boss and the rotating plate during anaerobic curing, the relative position between the boss and the rotating plate that have been positioned does not change due to the effect of temporary fixing. In addition, since anaerobic curing proceeds over a relatively long time, the influence of thermal expansion and thermal contraction hardly occurs.

The boss may have a first facing surface that faces the rotating plate and is in contact with the bonding portion in the direction along the rotation axis of the shaft. The bonding portion in contact with the first facing surface may be a bonding portion formed by anaerobic curing of the adhesive. The first facing surface may be flat or uneven.

When viewed from the direction along the rotation axis of the shaft, a ratio S 1/S2 of an area S1 of a part (exposed portion) of the bonding portion to an area S2 of the first facing surface may be 0.2 or more. By setting the ratio within this range, it is possible to secure an exposed portion necessary for temporarily fixing the boss and the rotating plate.

The boss may have an edge provided on at least one of an inner peripheral side and an outer peripheral side of the rotating plate and protruding toward the rotating plate from the first facing surface in the direction along the rotation axis of the shaft. The edge may be provided only on the inner peripheral side of the rotating plate, may be provided only on the outer peripheral side of the rotating plate, or may be provided on both the inner peripheral side and the outer peripheral side of the rotating plate. Such an edge protrudes upward from the first facing surface with the first facing surface facing upward. In this state, when the adhesive is applied to the region including the first facing surface of the boss and the rotating plate is disposed thereon, a part of the adhesive rises along the edge between the boss and the rotating plate. Due to this rising, the contact area between the boss and the rotating plate and the adhesive is increased as compared with the case where there is no edge. Since the risen adhesive can form an exposed portion by photocuring, the positioning action between the boss and the rotating plate by temporary fixing can be enhanced.

The rotating plate may have a second facing surface facing the first facing surface and in contact with the bonding portion in the direction along the rotation axis of the shaft, and a reflecting surface on the opposite of the second facing surface. The projection end of the edge may be closer to the base end of the edge than the reflecting surface in the direction along the rotation axis of the shaft. The bonding portion in contact with the second facing surface may be a bonding portion formed by anaerobic curing of the adhesive. The second facing surface may be flat or uneven. The projection end of the edge is positioned below the reflecting surface of the rotating plate with the first facing surface of the boss facing upward. In this state, when the adhesive is applied to the region including the first facing surface of the boss and the rotating plate is disposed thereon, the adhesive rising along the edge hardly reaches the reflecting surface of the rotating plate even if the adhesive protrudes above the projection end of the edge. Therefore, it is possible to prevent the adhesive from adhering to the reflecting surface of the rotating plate.

The boss may have a recess on at least one of the inner peripheral side and the outer peripheral side of the rotating plate, the recess being recessed so as to be away from the rotating plate in the direction along the rotation axis of the shaft. The recess may be provided only on the inner peripheral side of the rotating plate, only on the outer peripheral side of the rotating plate, or both on the inner peripheral side and the outer peripheral side of the rotating plate. Such a recess is recessed downward with a portion of the boss to which the rotating plate is attached, that is, a portion to which the adhesive is applied, facing upward. Even if a large amount of the adhesive is applied to the boss in this state, the excessive adhesive is accommodated in the recess and hardly adheres to a portion of the rotating plate where the adhesive application is unnecessary.

### (Motor)

The motor according to the present disclosure includes the encoder described above, the shaft, the rotor, and the stator. The motor may be, for example, an inner rotor three-phase synchronous electric motor, but is not limited thereto.

The shaft is attached to the boss of the encoder. The shaft may be attached to the boss by bolts. The shaft may be made of a magnetic material or a non-magnetic material.

The rotor is attached to the shaft. The rotor may include a rotor core made of a magnetic material. The rotor may further include a plurality of permanent magnets fixed to the rotor core.

The stator faces the rotor. The stator may face the rotor in the radial direction of the shaft, or may face the rotor in the axial direction of the shaft. The stator may include a stator core made of a magnetic material and a plurality of coils wound around the stator core.

### (Method for manufacturing encoder)

The method for manufacturing the encoder according to the present disclosure includes a preparation step, an application step, a positioning step, and a temporary fixing step.

In the preparation step, the boss and the rotating plate are prepared. Each of the boss and the rotating plate may be made of metal such as stainless steel, for example.

In the application step, an adhesive having a photocuring property (for example, an ultraviolet curing property) and an anaerobic curing property is applied to at least one of the boss and the rotating plate. For example, in the application step, the adhesive may be applied to the boss.

In the positioning step, the boss and the rotating plate are positioned such that a part of the adhesive is exposed from between the boss and the rotating plate and is in contact with the boss and the rotating plate. In the positioning step, the boss and the rotating plate may be positioned such that the axis of the boss coincides with the axis of the rotating plate.

In the temporary fixing step, the boss and the rotating plate are temporarily fixed by photocuring (for example, ultraviolet curing) at least a part of the adhesive. In the temporary fixing step, an uncured portion remains in the remainder of the adhesive. The temporary fixing may be performed to such an extent that the relative position between the boss and the rotating plate does not change from the positioned state. After completion of the temporary fixing step, the encoder may be sent to the next step (for example, a step of incorporating the encoder into the motor).

The method for manufacturing the encoder may further include a main fixing step of mainly fixing the boss and the rotating plate by anaerobically curing an uncured portion of the remainder of the adhesive. The environment in which the main fixing step is executed is not particularly limited. For example, the main fixing step may be performed in parallel with other manufacturing steps of the encoder and the motor including the encoder, or may be naturally progressed at any place after the motor manufacturing step is completed. Since the encoder can be sent to the next step without waiting for completion of the main fixing step (that is, completion of anaerobic curing of the adhesive agent), productivity of the encoder and the motor including the encoder can be enhanced.

As described above, according to the present disclosure, the productivity of the encoder and the motor including the encoder can be enhanced by effectively utilizing the photocuring property and the anaerobic curing property of the adhesive.

Hereinafter, an example of the encoder, the motor, and the method for manufacturing the encoder according to the present disclosure will be specifically described with reference to the drawings. The above-described components and steps can be applied to the components and steps of the encoder, the motor, and the method for manufacturing the encoder as an example described below. The components and steps of the encoder, the motor, and the method for manufacturing the encoder as the example described below can be changed based on the above description. In addition, matters to be described below may be applied to the exemplary embodiment described above. Among the components and steps of the encoder, the motor, and the method for manufacturing the encoder as the example described below, components and steps that are not essential to the encoder, the motor, and the method for manufacturing the encoder according to the present disclosure may be omitted. The following drawings are schematic and do not accurately reflect the shape and number of actual members.

### <<First exemplary embodiment>>

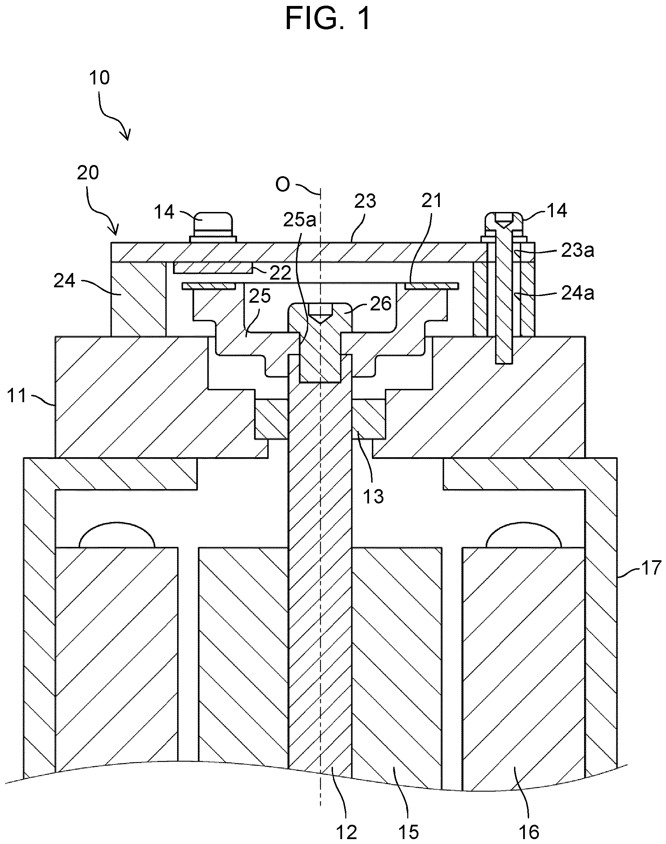

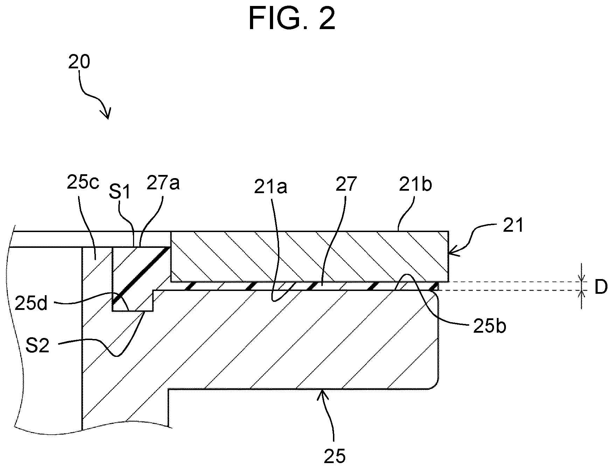

A first exemplary embodiment of the present disclosure will be described. Fig. 1 is a cross-sectional view schematically illustrating motor 10 including encoder 20 of the first exemplary embodiment. Fig. 2 is an enlarged cross-sectional view illustrating a main part of encoder 20 of the first exemplary embodiment. Hereinafter, first, a configuration of motor 10 including encoder 20 will be described, and then, a method for manufacturing encoder 20 will be described.

### (Configuration of motor)

Motor 10 of the present exemplary embodiment is an inner rotor three-phase synchronous electric motor, but is not limited thereto. As illustrated in Fig. 1, motor 10 includes shaft 12, rotor 15, stator 16, case 17, and encoder 20 having bracket 11.

Shaft 12 penetrates bracket 11 and is rotatably supported by bracket 11 via bearing 13. Shaft 12 is attached to boss 25 (described later) of encoder 20, and rotates together with boss 25 about its own rotation axis O.

Rotor 15 is attached to shaft 12. Rotor 15 rotates together with shaft 12 about rotation axis O. Rotor 15 of the present exemplary embodiment is an interior magnet rotor, but is not limited thereto.

Stator 16 faces rotor 15 with an air gap therebetween. Stator 16 is provided in the outer side, in the radial direction of motor 10, of rotor 15. Stator 16 of the present exemplary embodiment is a concentrated winding stator, but is not limited thereto.

Case 17 is a cylindrical member whose inside is hollow. Case 17 is coupled to bracket 11 and accommodates rotor 15 and stator 16. Stator 16 is fixed to an inner surface of case 17. Case 17 is made of a non-magnetic material (for example, aluminum or an aluminum alloy). In the present exemplary embodiment, case 17 and bracket 11 are separate parts, but may be integrally formed.

Encoder 20 of the present exemplary embodiment is a multiturn absolute encoder, but is not limited thereto. Encoder 20 of the present exemplary embodiment is a battery encoder, but may be a battery-less encoder including a permanent magnet and a power generating element. As illustrated in Figs. 1 and 2, encoder 20 includes bracket 11, boss 25, rotating plate 21, bonding portion 27, optical module 22, board 23, and frame 24. Encoder 20 may not include bracket 11, but also in such a case, bracket 11 is a component of motor 10.

Bracket 11 is a member for attaching encoder 20 to case 17. A through hole is formed at the center of bracket 11, and shaft 12 passes through the through hole. Bearing 13 that rotatably supports shaft 12 is fixed to an inner surface of the through hole. Bracket 11 accommodates rotor 15 and stator 16 together with case 17.

Boss 25 rotates about rotation axis O together with shaft 12. Boss 25 is fixed to shaft 12 by bolt 26 inserted into bolt hole 25a. Boss 25 is made of stainless steel, but is not limited thereto. Boss 25 has first facing surface 25b facing rotating plate 21 in the direction along the rotation axis O (vertical direction in Fig. 1; hereinafter, it is also referred to as a rotation axis direction). Boss 25 has first edge 25c that is provided on the inner peripheral side of rotating plate 21 and protrudes to rotating plate 21 (upper side in Fig. 2) from first facing surface 25b in the rotation axis direction. First edge 25c is formed over the entire circumference around rotation axis O. The projection end (upper end in Fig. 2) of first edge 25c is closer to the base end of first edge 25c than reflecting surface 21b described later in the rotation axis direction. In the example of Fig. 2, the projection end of first edge 25c is located below reflecting surface 21b in the rotation axis direction. Boss 25 is formed on the inner peripheral side of rotating plate 21, and has first recess 25d that is recessed away from rotating plate 21 in the rotation axis direction (downward in Fig. 2). First edge 25c is an example of the edge. First recess 25d is an example of the recess.

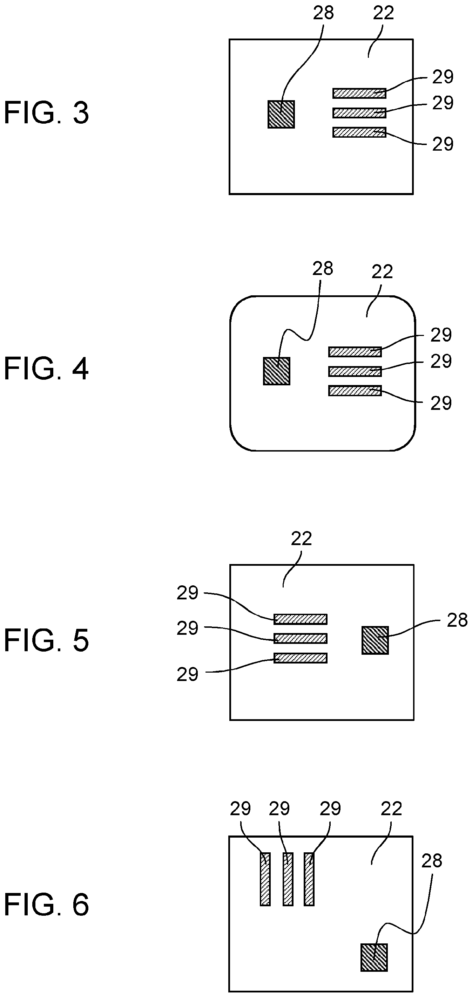

Rotating plate 21 is formed in a circular shape (alternatively, an annular ring). Rotating plate 21 is fixed to boss 25 and rotates about rotation axis O together with boss 25. Rotating plate 21 has a predetermined pattern formed along the circumferential direction thereof. The predetermined pattern is used for detecting the rotational position and the rotation speed of shaft 12. Rotating plate 21 is made of stainless steel, but is not limited thereto. Rotating plate 21 is opaque, but may have a certain degree of translucency. Rotating plate 21 has second facing surface 21a facing first facing surface 25b in the rotation axis direction and reflecting surface 21b on the opposite of second facing surface 21a. Reflecting surface 21b reflects light emitted from light source 28 (see Figs. 3 to 7) of optical module 22. Facing distance D between first facing surface 25b and second facing surface 21a is smaller than the depth of first recess 25d, but is not limited thereto.

Bonding portion 27 fixes boss 25 and rotating plate 21. Bonding portion 27 includes a cured product of an adhesive having a photocuring property and an anaerobic curing property. The adhesive includes, but is not limited to, a liquid acrylic resin. Bonding portion 27 is in contact with first facing surface 25b and second facing surface 21a.

Figs. 3 to 6 are plan views of optical module 22 according to the encoder of the first exemplary embodiment. Fig. 3 is a plan view in a case where optical module 22 has a rectangular shape. Fig. 4 shows a plan view in a case where optical module 22 has a rectangular shape with rounded corners. Fig. 5 is a plan view in a case where light source 28 and light receiving elements 29 in optical module 22 illustrated in Fig. 3 are replaced with each other. Fig. 6 is a plan view in a case where light source 28 and light receiving elements 29 in optical module 22 illustrated in Fig. 3 are arranged at positions shifted from each other along the direction in which rotating plate 21 rotates.

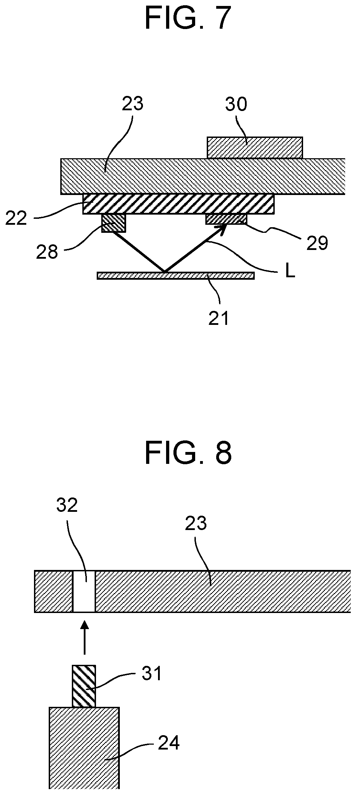

Fig. 7 is a cross-sectional view illustrating arrangement of optical module 22 and electronic component 30 on board 23 according to the encoder of the first exemplary embodiment.

Optical module 22 includes light source 28 (for example, an LED (light emitting diode)) that irradiates rotating plate 21 with light L and light receiving elements 29 (for example, a photodiode). Optical module 22 has a substantially rectangular shape when viewed from the rotation axis direction, but the shape is not particularly limited. The substantially rectangular shape includes not only the rectangular shape illustrated in Fig. 3 but also a shape in which corners of the rectangular shape illustrated in Fig. 4 are rounded. In Figs. 3 and 4, light source 28 is disposed at a position farther from rotation axis O than light receiving elements 29, and light source 28 and light receiving element 29 at the center are disposed along a direction perpendicular to rotation axis O.

Light receiving elements 29 receive the light emitted from light source 28 and reflected by rotating plate 21. Light receiving elements 29 convert the received light into an electric signal. The electric signal is used for obtaining the rotational position and the rotation speed of shaft 12.

As illustrated in Fig. 5, light source 28 and light receiving elements 29 in optical module 22 in Fig. 3 may be replaced with each other. That is, light source 28 may be disposed at a position closer to rotation axis O than light receiving elements 29. In addition, as illustrated in Fig. 6, light source 28 and light receiving elements 29 in optical module 22 illustrated in Fig. 3 may be arranged at positions shifted from each other along the direction in which rotating plate 21 rotates. In Figs. 3 to 6, light receiving elements 29 are three strip-shaped elements arranged in parallel, but the shape and arrangement of light receiving elements 29 and the number of light receiving elements 29 are not limited to those in Figs. 3 to 6. For example, light receiving elements 29 may have a square or circular shape. Furthermore, the arrangement and number of light receiving elements 29 are appropriately selected according to light source 28.

Fig. 7 illustrates arrangement of optical module 22 and electronic component 30 on board 23 according to the encoder of the first exemplary embodiment. Fig. 7 is a cross-sectional view of the vicinity of optical module 22 when board 23 is viewed from a direction perpendicular to axis C and perpendicular to a straight line connecting light source 28 and light receiving element 29 at the center. Light source 28 and light receiving elements 29 in optical module 22 are disposed as illustrated in Fig. 3. Fig. 7 also illustrates light L reflected from rotating plate 21 and light source 28 by rotating plate 21 and directed to light receiving elements 29.

Optical module 22 is attached to board 23. Various electronic components 30 are mounted on board 23. Board 23 has a substantially disk shape and has a plurality of attachment holes 23a (In Fig. 1, one attachment hole 23a is illustrated). Each of attachment holes 23a penetrates board 23 in the thickness direction thereof. Screws 14 (alternatively, bolts 14) for attaching board 23 to bracket 11 together with frame 24 are inserted into respective attachment holes 23a. Screw 14 fixes board 23 and frame 24 in a state of being positioned with respect to each other.

Frame 24 is fixed to bracket 11. Frame 24 may be substantially cylindrical. Frame 24 accommodates rotating plate 21 and supports board 23 such that optical module 22 faces rotating plate 21 (more specifically, a region of rotating plate 21 where a predetermined pattern is formed). Fig. 8 is a cross-sectional view illustrating attachment of board 23 to frame 24 according to the encoder of the first exemplary embodiment. Board 23 is fixed to frame 24 by predetermined fixing means. For example, as illustrated in Fig. 8, it is conceivable to press pin 31 of frame 24 into pin hole 32 formed in board 23 to fix them to each other. Frame 24 is formed at a position overlapping with attachment holes 23a, and has through holes 24a through which screws 14 are inserted.

As illustrated in Fig. 2, a part (exposed portion 27a) of bonding portion 27 is exposed from between boss 25 and rotating plate 21 and is in contact with boss 25 and rotating plate 21. Exposed portion 27a can be formed by irradiating an adhesive having a photocuring property and an anaerobic curing property with light. The ratio S1/S2 of area S1 of exposed portion 27a to area S2 of first facing surface 25b of boss 25 when viewed from the rotation axis direction is 0.2 or more, but is not limited thereto.

### (Method for manufacturing encoder)

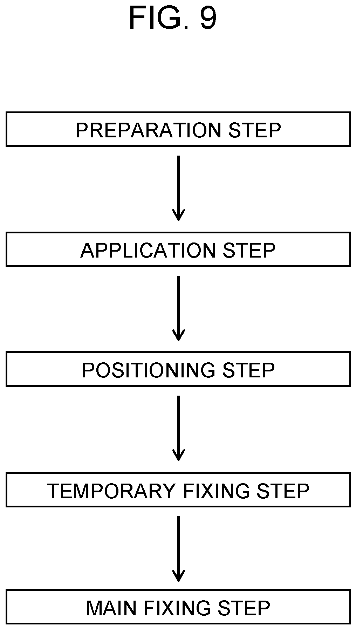

Fig. 9 is a flowchart of the method for manufacturing the encoder of the first exemplary embodiment. The method for manufacturing the encoder according to the present exemplary embodiment can be used to manufacture encoder 20 described above, and includes the preparation step, the application step, the positioning step, the temporary fixing step, and the main fixing step.

In the preparation step, boss 25 and rotating plate 21 are prepared.

In the application step, an adhesive having a photocuring property and an anaerobic curing property is applied to first facing surface 25b of boss 25. Alternatively or additionally, the adhesive may be applied to second facing surface 21a of rotating plate 21.

In the positioning step, boss 25 and rotating plate 21 are positioned such that a part of the adhesive is exposed from between boss 25 and rotating plate 21 and is in contact with boss 25 and rotating plate 21. At this time, boss 25 and rotating plate 21 are positioned such that the axis of the boss and the axis of the rotating plate coincide with each other.

In the temporary fixing step, boss 25 and rotating plate 21 are temporarily fixed by photocuring the part of the adhesive. The temporary fixing is performed to such an extent that the relative position between boss 25 and rotating plate 21 does not change from the positioned state in a subsequent step.

In the main fixing step, boss 25 and rotating plate 21 are mainly fixed by anaerobically curing the remainder of the adhesive (that is, an adhesive between first facing surface 25b and second facing surface 21a). As an advantage of the present exemplary embodiment, encoder 20 can be moved to the next step even before the main fixation is completed (that is, anaerobic curing of the remainder of the adhesive agent is in progress). As an example, it is possible to complete the assembly of motor 10 including encoder 20 before the main fixing is completed.

### <<Second exemplary embodiment>>

A second exemplary embodiment of the present disclosure will be described. Encoder 20 of the present exemplary embodiment is different from that of the first exemplary embodiment described above in including second edge 25e and the like. Hereinafter, differences from the first exemplary embodiment will be mainly described.

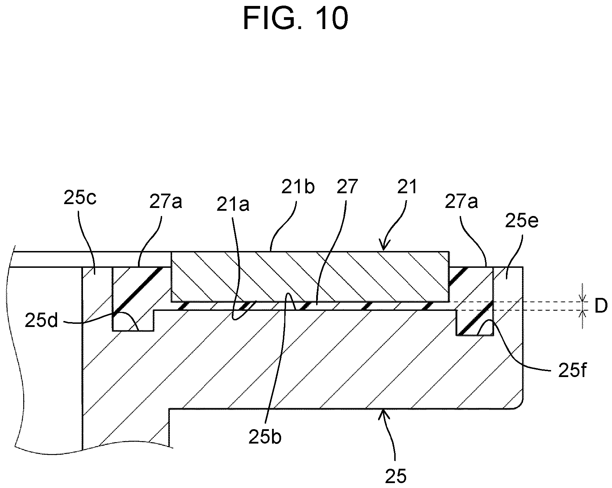

Fig. 10 is an enlarged cross-sectional view illustrating a main part of the encoder of the second exemplary embodiment. As illustrated in Fig. 10, boss 25 includes, in addition to first edge 25c, second edge 25e that is provided on the outer peripheral side of rotating plate 21 and protrudes to rotating plate 21 (upper side in Fig. 10) from first facing surface 25b in the rotation axis direction. Second edge 25e is formed over the entire circumference around rotation axis O. The projection end (upper end in Fig. 10) of second edge 25e is closer to the base end of second edge 25e than reflecting surface 21b in the rotation axis direction. In the example of Fig. 10, the projection end of second edge 25e is located below reflecting surface 21b in the rotation axis direction. Boss 25 includes, in addition to first recess 25d, second recess 25f formed on the outer peripheral side of rotating plate 21 and recessed away from rotating plate 21 in the rotation axis direction (downward in Fig. 10). Second edge 25e is an example of the edge. Second recess 25f is an example of the recess.

### INDUSTRIAL APPLICABILITY

The present disclosure can be used for an encoder, a motor, and a method for manufacturing the encoder.

### REFERENCE MARKS IN THE DRAWINGS

- 10: motor
- 11: bracket
- 12: shaft
- 13: bearing
- 14: screw (bolt)
- 15: rotor
- 16: stator
- 17: case
- 20: encoder
- 21: rotating plate
- 21a: second facing surface
- 21b: reflecting surface
- 22: optical module
- 23: board
- 23a: attachment hole
- 24: frame
- 24a: through hole
- 25: boss
- 25a: bolt hole
- 25b: first facing surface
- 25c: first edge (edge)
- 25d: first recess (recess)
- 25e: second edge (edge)
- 25f: second recess (recess)
- 26: bolt
- 27: bonding portion
- 27a: exposed portion
- D: facing distance
- O: rotation axis

## Claims

1. An encoder comprising:
a boss that rotates about a rotation axis of a shaft included in a motor;
a rotating plate that has a circular shape, is fixed to the boss, and rotates around the rotation axis;
a bonding portion that fixes the boss and the rotating plate; and
an optical module including a light source that irradiates the rotating plate with light and a light receiving element that receives light emitted from the light source and reflected by the rotating plate,
wherein the bonding portion includes a cured product of an adhesive having a photocuring property and an anaerobic curing property, and
wherein a part of the bonding portion is exposed from between the boss and the rotating plate and is in contact with the boss and the rotating plate.

2. The encoder according to Claim 1, wherein the boss includes a first facing surface that faces the rotating plate and is in contact with the bonding portion in a direction along the rotation axis of the shaft.

3. The encoder according to Claim 2, wherein a ratio S1/S2 of an area S1 of the part of the bonding portion to an area S2 of the first facing surface when viewed from a direction along the rotation axis is 0.2 or more.

4. The encoder according to Claim 2 or 3, wherein the boss has an edge provided on an inner peripheral side or an outer peripheral side of the rotating plate, the edge protruding toward the rotating plate from the first facing surface in a direction along the rotation axis.

5. The encoder according to Claim 4,
wherein the rotating plate includes a second facing surface that faces the first facing surface in the direction along the rotation axis and is in contact with the bonding portion, and a reflecting surface on an opposite of the second facing surface, and
wherein a projection end of the edge is closer to a base end of the edge than the reflecting surface in the direction along the rotation axis.

6. The encoder according to any one of Claims 1 to 5, wherein the boss has a recess on an inner peripheral side and/or an outer peripheral side of the rotating plate, the recess being recessed away from the rotating plate in the direction along the rotation axis.

7. A motor comprising:
the encoder according to any one of Claims 1 to 6;
a shaft attached to the boss;
a rotor attached to the shaft; and
a stator facing the rotor.

8. A method for manufacturing an encoder, the method comprising:
a preparation step of preparing a boss and a rotating plate;
an application step of applying an adhesive having a photocuring property and an anaerobic curing property to at least one of the boss and the rotating plate;
a positioning step of positioning the boss and the rotating plate to expose a part of the adhesive from between the boss and the rotating plate and bring the part of the adhesive in contact with the boss and the rotating plate; and
a temporary fixing step of temporarily fixing the boss and the rotating plate by photocuring at least the part of the adhesive.

9. The method according to Claim 8, further comprising a main fixing step of forming a bonding portion that mainly fixes the boss and the rotating plate by anaerobically curing an uncured portion of a remainder of the adhesive.
